# EUROPEAN PATENT APPLICATION

(11) **EP 4 793 617 A1**
(43) Date of publication of application: **19.08.2026**
(21) Application number: 26155672.4
(22) Date of filing: 02.02.2026
(51) Int. Cl.: G01M 11/00

(54) **OPTICAL APPARAUS, INSPECTION APPARATUS AND INSPECTION METHOD**

(30) Priority: 13.02.2025 JP 2025021280
(71) Applicant: SCREEN Holdings Co., Ltd., Kyoto-shi, Kyoto 602-8585 (JP)
(72) Inventor: YOSHIMOTO, Syuhei, Kyoto-shi, Kyoto 602-8585 (JP); MATSUMOTO, Toshiki, Kyoto-shi, Kyoto 602-8585 (JP); SAWADA, Natsushi, Kyoto-shi, Kyoto 602-8585 (JP); ISETANI, Koki, Kyoto-shi, Kyoto 602-8585 (JP); KONISHI, Katsuhide, Kyoto-shi, Kyoto 602-8585 (JP); ASADA, Kazuhiko, Kyoto-shi, Kyoto 602-8585 (JP)
(74) Representative: Goddar, Heinz J.

(57) **Abstract**

This invention is relates to an optical apparatus for inspecting an optical integrated circuit. The optical apparatus includes a light source which emits light, an illumination optical unit which is configured to shape the light emitted from the light source into a predetermined shape, a modulator which includes a spatial light modulator on which the light shaped by the illumination optical unit is incident, the modulator emitting modulated light having a predetermined pattern shape by modulating incident light by the spatial light modulator and, and a light guide which guides the modulated light to an input end of an optical waveguide provided in the optical integrated circuit. A time required for an alignment processing can be largely shortened.

## Description

### BACKGROUND OF THE INVENTION

### 1. Field of the Invention

This invention relates to a technique for inspecting an optical integrated circuit and particularly to an alignment technique for optimizing an incident position of light made incident on an optical waveguide for inspection.

### 2. Description of the Related Art

In a semiconductor device for information processing, as higher functions and higher integration are required, the amount of heat generation has also increased and it is strongly requested to further suppress power consumption. To meet such a request, a silicon photonics technology has attracted attentions. This technology is for realizing a processing with a low loss and in a wide band by providing a fine optical waveguide made of a semiconductor material in a semiconductor device and using information transmission by light.

An optical waveguide used in an optical integrated circuit, to which the silicon photonics technology is applied, is a fine single-mode waveguide having an end point of, for example, about 4 µm. Thus, for example, when the optical integrated circuit is inspected in a manufacturing process thereof, the incident position of inspection light made incident on the optical waveguide for inspection needs to be adjusted with high resolution and accuracy.

A processing for optimizing the incident position of the inspection light on the optical waveguide to align optical axes between an optical system of an inspection apparatus and the optical waveguide may be generally called an alignment processing (or merely alignment). Concerning this, a technique for inspecting an optical waveguide after performing an alignment processing between the optical waveguide to be inspected and an inspection apparatus is described, for example, in the specification of Japanese Patent No. 6331196 (patent literature 1). In this conventional technique, an optical waveguide device to be inspected, an irradiation optical unit for making inspection light incident on one end of the optical waveguide and a condensing optical unit for receiving light emitted from the other end of the optical waveguide are respectively mounted on a movable stage. A position alignment, i.e. an alignment processing, for aligning optical axes of these respective components is mechanically performed by a moving mechanism coupled to the movable stage.

In the above conventional technique, the moving mechanism having high positioning accuracy is necessary to realize a highly accurate position alignment. Further, a moving speed of that moving mechanism becomes a rate-limiting condition for the speeding-up of the alignment processing. Particularly, since optical waveguides of a plurality of channels are often provided in an actual optical device such as an optical integrated circuit, it requires a long time to successively perform the alignment processing for each of those channels. From this, a technique is required which enables an alignment processing to be performed in a shorter time and can suppress an increase in processing time particularly for optical waveguides of a plurality of channels.

### SUMMARY OF INVENTION

This invention was developed in view of the above problem and proposes a technique enabling an optical waveguide provided in an optical integrated circuit to be efficiently inspected by largely shortening a time required for an alignment processing.

One aspect of the invention is directed to an optical apparatus for inspecting an optical integrated circuit. This optical apparatus is provided with a light source for emitting light, an illumination optical unit for shaping the light emitted from the light source into a predetermined shape, a modulator including a spatial light modulator on which the light shaped by the illumination optical unit is incident, the modulator emitting modulated light having a predetermined pattern shape by modulating incident light by the spatial light modulator, and a light guide for guiding the modulated light from the modulator to an input end of an optical waveguide provided in the optical integrated circuit.

In the optical apparatus thus configured, a light beam having a smaller spot size can be emitted from the light shaped by the illumination optical unit by forming the modulated light having the predetermined pattern shape by the spatial light modulator. For example, the light beam narrowed to such a spot size that guided mode coupling is possible between the optical waveguide and the light beam can be emitted. In the spatial light modulator, from which position the light is emitted can be set by an electrical control. By changing the light emission position from the spatial light modulator, the light incident position on the optical waveguide also changes.

In other words, a positional relationship between the input end of the optical waveguide and the light irradiated thereto can be changed by the electrical control substantially not dependent on a mechanical movement. This means that the position alignment of an irradiation optical unit and the optical waveguide by a relative mechanical movement in the above conventional technique can be replaced by a position change only by the electrical control. Thus, the alignment processing between the optical waveguide and the optical apparatus, on which light is incident, can be performed much faster as compared to the conventional technique accompanied by the mechanical movement.

Further, by appropriately setting a modulation pattern of the spatial light modulator, a plurality of small-diameter beams can be generated. This means that, in the case of providing a plurality of optical waveguides in the optical integrated circuit to be inspected, light can be simultaneously made incident on those optical waveguides. That is, even if the optical integrated circuit includes the plurality of optical waveguides, the alignment processing can be performed in parallel for those and a processing time can be drastically shortened as compared to the case of successive processing.

Further, another aspect of the invention is directed to an inspection apparatus for inspecting an optical integrated circuit. This inspection apparatus is provided with a holder for holding the optical integrated circuit to be inspected, a light emitting unit including the optical apparatus described above, and emits the modulated light as inspection light to be incident on an input end of the optical waveguide via the light guide, a light receiving unit for receiving light emitted from an output end of the optical waveguide as detected light, and a controller for adjusting an incident position of the inspection light on the input end by controlling the spatial light modulator.

In the inspection apparatus thus configured, a relationship of the incident position of the inspection light on the optical waveguide and the amount of the light emitted from the optical integrated circuit can be obtained by making the inspection light incident while the input position on the optical waveguide is set and changed by the electrical control and receiving the light emitted from the inside of the optical integrated circuit as described above. Using this result, the alignment processing between the light emitting unit and the optical waveguide can be performed.

As described above, the alignment processing performed in this way can be performed faster than the conventional technique accompanied by a mechanical movement. Further, even if there are a plurality of the optical waveguides, a processing for those can be performed in parallel. Thus, the prolongation of the processing time can be suppressed. In a most preferred state, the processing for the plurality of optical waveguides can have the same processing time as the processing for the single optical waveguide.

Further, another aspect of the invention is directed to an alignment method for inspecting characteristics of an optical waveguide provided in an optical integrated circuit. This alignment method includes making light emitted from a light source and shaped into a predetermined shape incident on a spatial light modulator arranged on an optical path of the light, modulating the light by the spatial light modulator, emitting the modulated light as emitted light having a predetermined pattern shape and changing the pattern shape of the modulated light by the spatial light modulator with time, making the modulated light from the spatial light modulator as inspection light incident on an input end of the optical waveguide and scanning an incident position of the inspection light on the input end, receiving light emitted from an output end of the optical waveguide as detected light while the incident position of the inspection light is scanned, and setting an emission position of the modulated light to the incident position where a received light amount of the detected light is maximized.

Also in the alignment method thus configured, the light emitted from the optical waveguide is received while the light incident on the optical waveguide is scanned by changing the emission position of the light emitted from the spatial light modulator with time. Since the received light amount is thought to be maximized in a state where an alignment is realized, the alignment processing can be completed by setting the emission position of the light emitted from the spatial light modulator to satisfy such a condition. As described above, a high-speed processing is possible and, even if there are a plurality of optical waveguides to be processed, an increase in processing time is suppressed.

As described above, according to the invention, a time required for an alignment processing can be largely shortened.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

### BRIEF DESCRIPTION OF THE DRAWINGS

FIG. 1 is a block diagram showing a schematic configuration of one embodiment of an inspection apparatus according to the invention;
FIG. 2 is a diagram showing the structure and functions of the light emitting unit in more detail;
FIGS. 3A to 3C are diagrams schematically showing the structure of the MEMS phased array;
FIGS. 4A to 4C are diagrams showing the principle of the alignment processing in this embodiment;
FIG. 5 is a diagram showing another example of the structure of the light emitting unit;
FIG. 6 is a flow chart showing processing contents of the alignment processing of this embodiment based on the above principle and characteristic inspection based on the result of the alignment processing; and
FIG. 7 is a chart showing the principle of a processing for determining the scanning range.

### DETAILED DESCRIPTION OF THE PREFERRED EMBODIMENTS

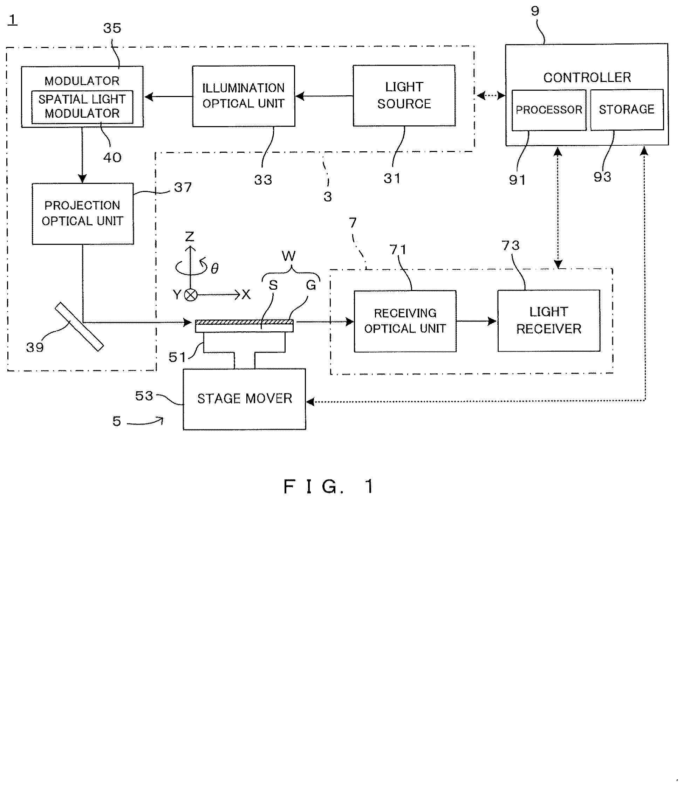

FIG. 1 is a block diagram showing a schematic configuration of one embodiment of an inspection apparatus according to the invention. This inspection apparatus 1 is an apparatus for inspecting characteristics of an optical waveguide incorporated into a substrate. More specifically, the inspection apparatus 1 is used to inspect optical characteristics of the optical waveguide with a semiconductor device, in which an optical waveguide G made of a semiconductor material or the like is formed in a semiconductor substrate S of silicon or the like, for example, like an optical integrated circuit, as a work W to be inspected. The optical waveguide made of the semiconductor material in this way is generally a single-mode waveguide.

The inspection apparatus 1 is provided, as main components thereof, with a light emitting unit 3 for generating inspection light, a holder 5 for holding the work W, a light receiving unit 7 for receiving light emitted from the work W and a controller 9 for controlling the operation of each of these components. In FIG. 1, solid-line arrows represent a path of light, and dotted-line arrows represent a flow of an electrical signal.

The light emitting unit 3 generates inspection light necessary to inspect the optical waveguide and irradiates the inspection light to the work W. For this purpose, the light emitting unit 3 is provided with a light source 31, an illumination optical unit 33, a modulator 35 including a spatial light modulator 40, a projection optical unit 37 and a reflection mirror 39. The light source 31 is a laser light source for emitting light of a wavelength transmitting through the optical waveguide, e.g. infrared rays in a T band. The illumination optical unit 33 shapes the laser light emitted from the light source 31 into a line beam.

The modulator 35 includes the spatial light modulator 40 and modulates and outputs the line beam emitted from the illumination optical unit 33 by the spatial light modulator 40. This point is described in detail later. The modulated light beam is condensed by the projection optical unit 37 including a convergent lens to be described later, has an optical path reflected substantially in a horizontal direction by the reflection mirror 39, and is irradiated to a side surface of the work W held by the holder 5. The reflection mirror 39 contributes to making the light emitting unit 3 compact by reflecting the optical path and is used to modulate an incident angle of light on the work W by changing the inclination thereof if necessary.

The holder 5 is provided with a stage 51 for holding the work W in a horizontal posture and a stage mover 53 for moving the stage 51. The stage mover 53 moves the stage 51 in X-, Y-, Z-, and θ-axis directions by an appropriate driving mechanism including, for example, a rotary motor and a linear motor. Here, an XY plane is a horizontal plane, and a direction of a Z axis is a vertical upward direction. Further, a θ direction is a rotation direction about the Z axis. XYZ coordinate axes shown in FIG. 1 represent the postures and directions of the stage 51 and the work W, and are used to uniformly show directions also in figures described later.

That is, the stage 51 can move in horizontal directions and the vertical direction and rotate about a vertical axis. In this way, the work W held on the stage 51 is positioned to a position suitable for inspection. Note that at least some of these moving axes may be omitted, depending on the configuration of the other part of the apparatus.

The light receiving unit 7 receives the light emitted from the optical waveguide G of the work W. For this purpose, the light receiving unit 7 is provided with a light receiver 73 for generating a signal corresponding to an amount of the incident light, and a receiving optical unit 71 for condensing the light emitted from the work W and leading the condensed light to the light receiver 73. The light receiver 73 is a photosensor having at least a linear, more preferably two-dimensional position resolution, and an image sensor such as a CCD sensor or a CMOS sensor can be suitably applied.

The controller 9 is provided with at least a processor 91 for performing a predetermined operation by executing a control program prepared in advance and controlling each component of the apparatus, and a storage 93 for storing various pieces of information. A central processing unit (CPU), a micro-processing unit (MPU), a graphic processing unit (GPU), an application specific integrated circuit (ASIC), a field programmable gate array (FPGA) and the like can be appropriately combined and used as the processor 91. Further, a memory such as a RAM (Random Access Memory) for storing data in a short term, a HDD (Hard Disk Drive) and an SSD (Solid-State Disk) for storing data in a longer term and the like can be appropriately combined and used as the storage 93. A personal computer having a general hardware configuration may be, for example, used as the controller 9.

The controller 9 positions the work W to a proper position by controlling the holder 5. Further, the controller 9 causes the light emitting unit 3 to emit inspection light necessary for inspection by controlling the light emitting unit 3. Furthermore, the controller 9 controls the light receiving unit 7 to receive a signal representing a received light amount from the light receiving unit 7 and measures optical characteristics of the optical waveguide G based on that signal.

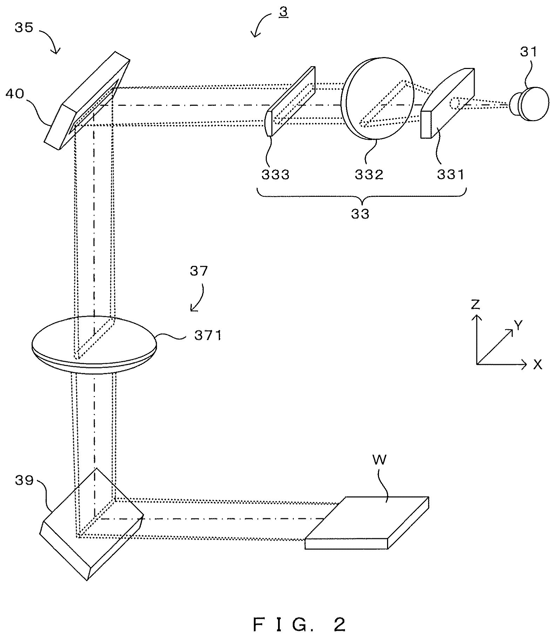

FIG. 2 is a diagram showing the structure and functions of the light emitting unit in more detail. Note that an optical element such as a lens shown as a single member in FIG. 2 for description of principle may be configured as an optical system obtained by combining a plurality of optical elements. Further, in FIG. 2, a one-dot chain line represents an optical axis of an optical system constituting the light emitting unit, and dotted lines schematically show the spread of rays.

The illumination optical unit 33 is provided with a cylindrical lens 331, a collimation lens 332 and a cylindrical lens 333 arranged in this order along the optical path of the light emitted in a (-X) direction from the light source 31. The cylindrical lens 331 has no power in the Z direction while having power in a Y direction, and spreads the laser light emitted from the light source 31 in the Y direction. The spread laser light is shaped into collimated light by the collimation lens 332. Therefore, the laser light emitted from the collimation lens 332 is a line beam having a flat light intensity distribution having the Y direction as a longitudinal direction.

The line beam is narrowed in the Z direction by the cylindrical lens 331 having power in the Z direction, and converged on a reflection surface of the spatial light modulator 40 provided in the modulator 35. The spatial light modulator 40 is a MEMS (Micro Electro Mechanical Systems) phased array. The spatial light modulator 40 reflects the light incident in the (-X) direction in a (-Z) direction and changes a reflection mode in response to a control command from the controller 9, thereby spatially modulating the emitted light. The modulated light is converged by a focusing lens 371 provided in the projection optical unit 37, reflected in a (+X) direction by the reflection mirror 39 and incident as inspection light on a (-X) side end surface of the work W. The focusing lens 371 is arranged to focus the inspection light on the (-X) side end surface of the work W. In this way, a light beam narrowed to a numerical aperture (NA) of the optical waveguide G or smaller is irradiated as the inspection light. Note that, in this embodiment, the projection optical unit 37 reduces an image formed on the spatial light modulator 40 and projects the reduced image to the (-X) side end surface of the work W.

Next, the configuration of the spatial light modulator 40 is described. The spatial light modulator 40 is, for example, a movable ribbon-type MEMS (Micro Electro Mechanical Systems) phased array. In this embodiment, the MEMS phased array is used as a programmable one-dimensional diffraction grating type light modulator for diffracting and emitting incident light and changing an emission mode thereof with time. The MEMS phased array may be called a "diffractive optical element" below. A GLV (Grating Light Valve) element of Silicon Light Machines ("GLV" is a registered trademark of this company) is, for example, suitably applicable as the diffractive optical element (DOE).

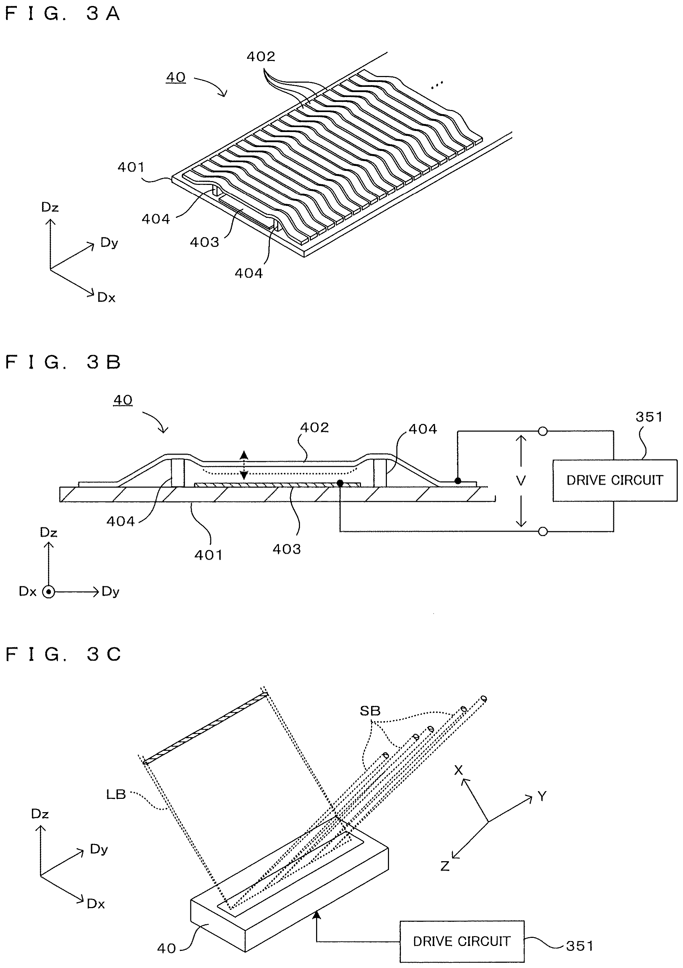

FIGS. 3A to 3C are diagrams schematically showing the structure of the MEMS phased array. More specifically, FIG. 3A is a diagram schematically showing a schematic configuration of the spatial light modulator 40, which is one form of the MEMS phased array. FIG. 3B is a diagram showing a possible state of the spatial light modulator 40. Further, FIG. 3C is a diagram showing a function of the spatial light modulator 40 in this embodiment.

As shown in FIG. 3A, the spatial light modulator 40 has such a schematic configuration that a plurality of movable ribbons 402 are arranged at regular intervals in a direction parallel to a surface of the flat plate-like bottom electrode 403 while facing the surface of the bottom electrode 403 on a substrate 401. In the movable ribbon 402, the upper surface thereof serves as a reflection surface for reflecting light, for example, by a metal coating. The movable ribbons 402 are respectively fixed at regular intervals to the bottom electrode 403. That is, a distance between the movable ribbons 402 and the bottom electrode 403 is specified by a pair of post anchors 404 standing on the substrate 401 to sandwich the bottom electrode 403.

In the following description, orthogonal coordinates are set as shown in FIG. 3A to uniformly show directions in the spatial light modulator 40 while being distinguished from spatial coordinates shown in FIG. 1 and the like. Out of directions along the surface of the substrate 401, a longitudinal direction of each of the plurality of movable ribbons 402 is a Dx direction and an array direction of the movable ribbons 402 is a Dy direction. Further, a direction perpendicular to the surface of the substrate 401 is a Dz direction.

In the spatial light modulator 40, a multitude of the movable ribbons 402 having the Dx direction as the longitudinal direction are arrayed in the Dy direction, and in the entire spatial light modulator 40, which is an aggregate of the movable ribbons 402, length thereof is longer in the Dx direction than in the Dy direction. Therefore, the Dy direction can be thought as the longitudinal direction in the entire spatial light modulator 40.

The movable ribbons 402 are displaceable with respect to the bottom electrode 403. Specifically, as shown in FIG. 3B, if a control voltage V is applied between the movable ribbon 402 and the bottom electrode 403, the movable ribbon 402 is deformed by an electrostatic force and displaced in a direction toward/away from, i.e. along the Dz direction, the bottom electrode 403 as shown by solid line and dotted line. A displacement amount of the movable ribbon 402 depends on a magnitude of the control voltage V. The modulator 35 is provided with a drive circuit (e.g. a CMOS driver) 351, which operates in response to a control command from the controller 9, and the control voltage V is applied to the movable ribbon 402 from this drive circuit 351.

The control voltage V fed from the drive circuit 351 can be individually set for each movable ribbon 402. Thus, a height of the movable ribbon 402 in the Dz direction can be individually controlled by the magnitude of the control voltage V. Therefore, when the surfaces of the plurality of movable ribbons 402 are macroscopically viewed, various uneven patterns are realized by height differences of the respective movable ribbons 402.

For example, when all the movable ribbons 402 are at the same surface height as shown in FIG. 3A, the surfaces of those movable ribbons 402 constitute a plane mirror as a whole. That is, if the light is made incident on the surfaces of the movable ribbons 402, the specular reflection light thereof is emitted from the surfaces of the movable ribbons 402. That is, the surface of the spatial light modulator 40, which is an aggregate of the movable ribbons 402, functions as a plane mirror.

On the other hand, if a step of a quarter wavelength of light is provided between the adjacent movable ribbons 402, an optical path difference of a half wavelength is produced between beams of light reflected by those movable ribbons 402, and those beams of light cancel each other and are not emitted to outside. As just described, reflection modes of the light from the spatial light modulator 40 can be made variously different by individually controlling a displacement of each movable ribbon 402.

A usage mode of the spatial light modulator 40 in this embodiment is as shown in FIG. 3C. That is, the spatial light modulator 40 is so arranged that a longitudinal direction of incident light incident as a line beam LB is the Dy direction, and emits spot light beams SB having a small spot size in the Dy direction by partially reflecting the line beam LB in the Dy direction. By reflecting the light by the plurality of movable ribbons 402 discretely arranged, a plurality of spot light beams SB can be simultaneously generated from one line beam LB as shown in FIG. 3C.

A relationship of the posture and XYZ coordinates of the spatial light modulator 40 in a real space where the spatial light modulator 40 is disposed are as follows. First, the Dy direction, which is the longitudinal direction of the spatial light modulator 40, corresponds to the Y direction in the real space. That is, the spatial light modulator 40 is so arranged that the longitudinal direction thereof coincides with the longitudinal direction of the line beam LB. Therefore, the spatial light modulator 40 has a resolution in the longitudinal direction of the incident line beam LB. Further, an incident direction of the line beam LB corresponds to the X direction, more particularly the (-X) direction, and an emission direction of the spot light beams SB corresponds to the Z direction, more particularly the (-Z) direction.

As just described, the spatial light modulator 40 in this embodiment has a function of generating a plurality of spot light beams SB from the line beam LB, i.e. converting a line beam into multiple spots. Since which movable ribbon 402 reflects light can be arbitrarily changed and set by an electrical control, various arrangement patterns of the spot light beams SB emitted from the spatial light modulator 40 can be set and, moreover, the arrangement pattern can be changed with time. Thus, optical scanning by a plurality of spot light beams can be simultaneously performed for an object to be irradiated.

In the case of using the GLV element described above as the spatial light modulator 40, since the GLV element having a switching frequency of 100 kHz or more has been made into a product, this optical scanning can be performed at a very high speed, for example, as compared to that by a mechanical scanning mechanism by using such an element.

As described next, in the inspection apparatus 1 of this embodiment, optical scanning at such a high speed is applied to an alignment processing of the apparatus and the work W. That is, in the conventional technique, inspection light is made incident on an optical waveguide while relative positions of an optical system of an apparatus and a work are mechanically changed, and the emitted light is detected. Instead of such a mechanical movement, optical scanning by the spatial light modulator 40 is utilized in this embodiment.

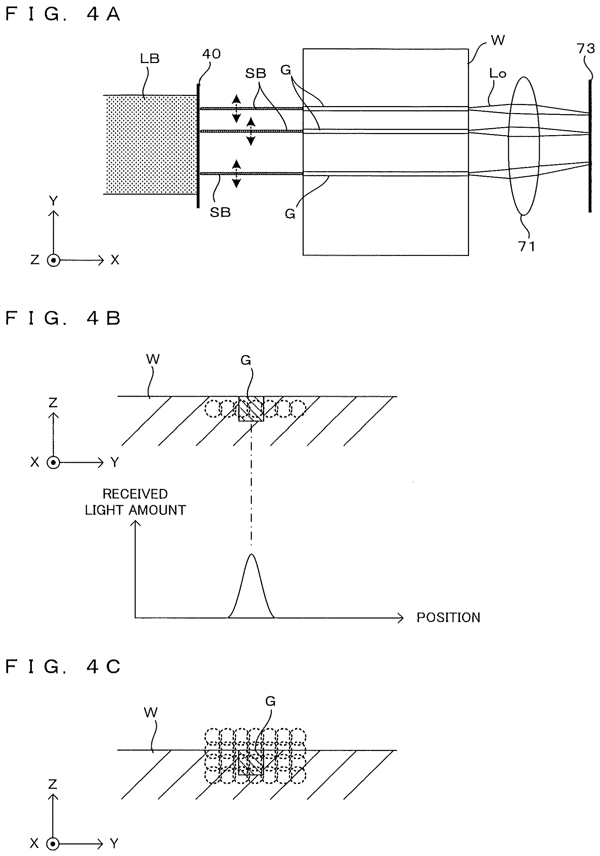

FIGS. 4A to 4C are diagrams showing the principle of the alignment processing in this embodiment. FIG. 4A is a diagram schematically showing a path of light in the alignment processing. For the description of the principle, out of the optical elements on an optical path, some not related to the description are not shown, and the reflection of the optical path is ignored in FIG. 4A. Further, it is assumed here that three optical waveguides G are provided in the work W and input ends thereof are provided on a (-X) side of the work W and output ends thereof are provided on a (+X) side. Actually, a positional relationship of the input ends and the output ends of the optical waveguides is not limited to this. In that case, the light receiving unit 7 may be arranged according to the positions of the output ends. Further, in a general structure, the input ends and the output ends of the optical waveguides are not fixedly defined, and those are mutually interchangeable. Further, appropriate optical circuit elements such as a filter, a switch, and the like may be inserted in the optical waveguide G.

As described above, the line beam LB emitted from the illumination optical unit 33 is converted into one or more spot light beams SB by the spatial light modulator 40. Here, three spot light beams SB are emitted from the spatial light modulator 40 to correspond to the three optical waveguides G, and irradiated to the (-X) side surface of the work W.

If the spot light beam SB irradiated to the input end of the optical waveguide G satisfies incident conditions on the optical waveguide G, light is transmitted through the inside of the optical waveguide G and emitted from the output end on the (+X) side. Conversely, the purpose of the alignment processing is to adjust the incident position and incident direction of the spot light beam SB so that light irradiated to the input end is emitted from the output end. Conditions required for the incident light are as follows.

An optical waveguide formed in an optical integrated circuit is generally a single-mode waveguide, wherefore a center of the spot light beam SB, which is incident light, needs to highly accurately coincide with an optical axis of the optical waveguide G. Further, the incident light needs to be narrowed to the numerical aperture of the optical waveguide G or smaller. In this embodiment, these conditions are satisfied as follows. That is, the spot light beam SB emitted from the spatial light modulator 40 is shaped by the projection optical unit 37, and made incident on the input end of the optical waveguide G as such a converged light beam that an irradiation range (e.g. a range including 90 % of the total amount of the spot light beam SB) is located inside an input end of the optical waveguide G.

In the present optical integrated circuit, optical waveguides having a cross-sectional size of about 3 to 5 µm are mainly used. In the case of using the GLV element as the spatial light modulator 40, the spot light beam SB having such a spot size can be generated by a combination with an appropriate optical system (e.g. reduction optical system). In this embodiment, the spot size of the spot light beam SB is adjusted by appropriately setting the number of the movable ribbons 402 for forming one spot light beam SB and a projection magnification of a beam in the projection optical unit 37.

However, an adjustment for making a center of light and the optical axis of the optical waveguide G coincide is separately necessary. For this adjustment, optical scanning by the spatial light modulator 40 described above is utilized. That is, as shown in FIG. 4A, the positions of the spot light beams SB can be changed in the Y direction by the control of the spatial light modulator 40. Accordingly, as shown by dotted-line circles in FIG. 4B, emitted light Lo from the output end at each time is received as detected light by the light receiving unit 7 and a received light amount is obtained while the incident position of the spot light beam SB as inspection light on the input end of the optical waveguide G is scanned in the Y direction by the spatial light modulator 40. In this way, a correlation between the incident position of the inspection light and the amount of the corresponding detected light can be obtained.

When the received light amount is maximized, a center of the spot light beam SB and the optical axis of the optical waveguide G are thought to coincide best. Accordingly, the input positions of the spot light beams SB when the received light amount is maximized are obtained, and a reflection pattern of the spatial light modulator 40 necessary to make the spot light beams SB incident at these positions is specified, whereby the purpose of the alignment processing is achieved. That is, if the line beam LB is made incident with the spatial light modulator 40 controlled to attain the specified reflection pattern, the spot light beams SB are irradiated to the input ends with the centers thereof coinciding with the optical axes of the optical waveguides G well.

In such a processing, to change the input positions of the spot light beams SB on the optical waveguides G, mechanical movements between these are not necessary, and a processing is limited by a switching speed of the reflection pattern of the spatial light modulator 40 by an electrical control signal. Since such switching is performed at a very high speed as compared to mechanical movements, a time required for the alignment processing is largely shortened.

As described above, the spot light beam SB can be emitted at an arbitrary timing from each position of the spatial light modulator 40 and, moreover, a plurality of spot light beams SB can be emitted independently of each other. Thus, the alignment processing (specifically, optical scanning, detection of the received light amount and determination of the reflection pattern based on that) can be performed in parallel for the plurality of optical waveguides G. In this way, even if the plurality of optical waveguides G are provided in the optical integrated circuit, an increase in processing time can be suppressed.

Note that, although the alignment processing is performed by optical scanning in the X direction, there is a possible case where the position of the optical waveguide varies in the Z direction, for example, due to the warping of the work W and the alignment processing in this direction is necessary. In this case, if a spatial light modulator having a two-dimensional resolution is used, it is possible to realize two-dimensional optical scanning for the optical waveguide G as shown in FIG. 4C. Then, a two-dimensional reflection pattern capable of maximizing the received light amount may be determined from a detection result of the received light amount in each of the Y direction and the Z direction.

A PLV (Planar Light Valve) element of Silicon Light Machines ("PLV" is a registered trademark of this company) or an LCOS (Liquid Crystal on Silicon) element, which is one type of a liquid crystal optical element, is suitably applicable as such a two-dimensional spatial light modulator.

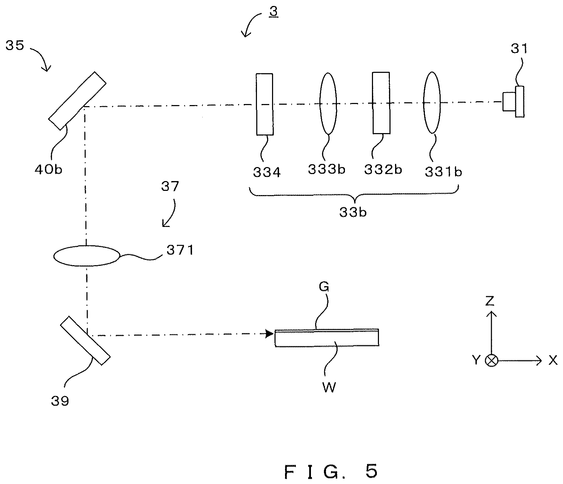

FIG. 5 is a diagram showing another example of the structure of the light emitting unit. More specifically, FIG. 5 shows a configuration example of the light emitting unit capable of performing two-dimensional optical scanning for the optical waveguide G. An illumination optical unit 33b of the configuration example shown in FIG. 5 is provided with a convex lens 331b, a concave lens 332b, a convex lens 333b and a polarizer 334 arranged in this order along an optical path of light emitted in the (-X) direction from the light source 31. Further, a two-dimensional spatial light modulator, e.g. an LCOS element, is provided as a spatial light modulator 40b of the modulator 35.

The light emitted from the light source 31 is shaped into a Gaussian beam of a predetermined size by the convex lens 331b, the concave lens 332b and convex lens 333b of the illumination optical unit 33b. Here, the "shaping" of the light means not only the deformation of a shape in a cross-section of the beam, but also the enlargement or reduction of a beam diameter. For example, a light beam of an appropriate spot size having a rectangular or elliptical cross-sectional shape is shaped by the illumination optical unit 33b. The polarizer 334 aligns the polarization of the light incident on the spatial light modulator 40b by transmitting specific polarized light.

The spatial light modulator 40b generates a plurality of spot light beams SB by modulating the phase of the light incident from an illumination optical unit 33b by a reflection surface. The spot light beams SB formed by the illumination optical unit 33b are incident on the input end of the optical waveguide G in the work W by way of the projection optical unit 37 and the reflection mirror 39. The projection optical unit 37 converges the plurality of spot light beams SB at the input end of the optical waveguide G. Further, the reflection mirror 39 reflects the spot light beams SB in the (+X) direction and makes those incident as inspection light on the (-X) side end surface of the work W.

The spatial light modulator 40b controls a phase modulation pattern by the LCOS element, whereby the incident positions of the spot light beams SB on the optical waveguide G can be changed in both the Y direction and the Z direction.

In the case of receiving light emitted from the output end of the optical waveguide by an optical fiber, the optical axes of the optical waveguide and the optical fiber need to be aligned also at the output side. In this embodiment, the emitted light from the optical waveguide is received by a linear or two-dimensional image sensor. Thus, as long as that emitted light is not outside a light receiving area of the image sensor, a strict alignment processing on the output side is unnecessary.

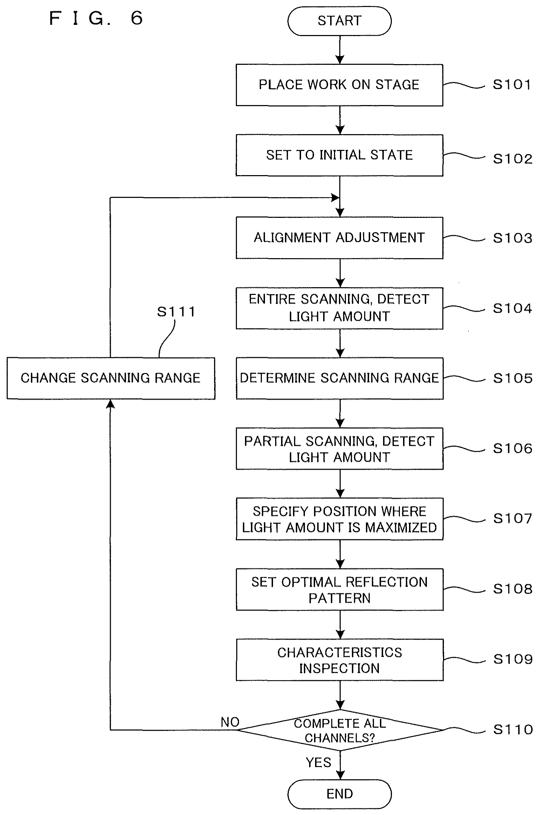

FIG. 6 is a flow chart showing processing contents of the alignment processing of this embodiment based on the above principle and characteristic inspection based on the result of the alignment processing. This processing is realized by the processor 91 of the controller 9 performing a procedure specified by the predetermined control program to cooperatively operate the respective components of the apparatus. First, the work W as an object to be inspected is carried into the apparatus, and placed on the stage 51 (Step S101). Each component of the apparatus is set to an initial state (Step S102). For example, the stage 51 is positioned at a predetermined initial position.

Subsequently, an alignment adjustment for positioning the work W in the apparatus to a specified position determined in advance is performed (Step S103). Contents of the alignment adjustment are arbitrary. For example, it is possible to apply a technique for providing an alignment mark on the work W in advance, imaging the alignment mark by a camera or the like, and moving the stage 51 based on a result of position detection.

Further, if design data of the work W is usable, the alignment adjustment can be performed as follows. That is, at least one, more preferably two reference waveguides are determined in advance, out of the optical waveguides G provided in the work W. The inspection light is irradiated from the light emitting unit 3 toward the position of the input end of the reference waveguide obtained from the design data, and the light emitted from the reference waveguide is detected by the light receiving unit 7. The controller 9 positions the stage 51 by operating the stage mover 53 such that the receiving light amount is maximized. In this way, the alignment adjustment can be performed. This method is particularly effective for inclination about the θ axis (FIG. 1).

Subsequently, the positions of the optical waveguides G provided in the work W are detected, and an optical scanning range to be used in Step S106 to be described later (Steps S104, S105) is determined based on a detection result. Note that, if the positions of the optical waveguides G can be specified from the design data in advance, these processing steps can be omitted. In this processing, the entire end surface of the work W is optically scanned at relatively coarse intervals, and the amount of the light received by the light receiving unit 7 is detected (Step S104). If the input end of the optical waveguide G is located at the input position of the inspection light, the light is emitted from the output end of the optical waveguide G. By detecting this, an approximate position of the optical waveguide G can be estimated even if the position of the optical waveguide G is unknown.

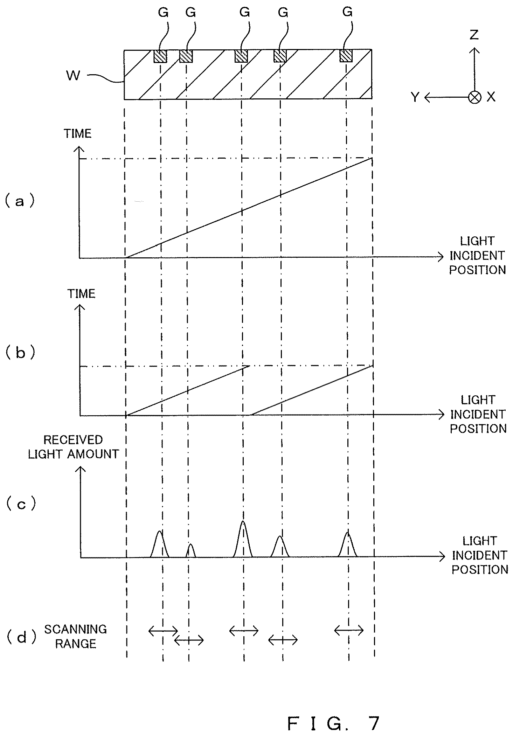

FIG. 7 is a chart showing the principle of a processing for determining the scanning range. Here, an example in which five optical waveguides (five channels) are arranged at nonuniform pitches in the work W. As shown in FIG. 7(a), the end surface of the work W is optically scanned by changing the incident position of the inspection light in the Y direction with time, and the amount of the light (detected light) received by the light receiving unit 7 is detected for each position (Step S104). Then, as shown in FIG. 7(c), a peak of the light amount appears near the position where the optical waveguide G is provided. In other words, it can be estimated that the optical waveguide G is provided at a position near such a peak.

Note that, in optical scanning using the spatial light modulator 40, a plurality of inspection light beams can be made simultaneously incident at different positions of an object to be scanned. Thus, as shown in FIG. 7(b), the scanning range of the work W may be divided into a plurality of blocks and optical scanning may be performed in parallel for those blocks. By doing so, a time necessary to optically scan the entire work W can be shortened to half. Here, although the work W is divided into two blocks and scanned, the work W may be divided into three or more blocks, whereby a required time can be further shortened.

Further, as a method for shortening the processing time, a multitude of spot light beams SB may be, for example, simultaneously irradiated at regular intervals in the Y direction instead of optical scanning over time, and the received light amount may be detected at each position at this time. This method is particularly effective if an arrangement pitch of the optical waveguide G is relatively wide.

At this point of time, since relatively coarse optical scanning is performed, the peak position does not necessarily represent an optimal position for alignment. Further, a peak height also varies depending on the light incident position. As just described, a detected peak merely indicates a region where the optical waveguide G is highly probably present. Accordingly, as shown in FIG. 7(d), a relatively narrow scanning range including the peak position of the received light amount is set for each peak (Step S105), and the highly accurate alignment processing is realized by performing optical scanning at narrow pitches for those scanning ranges.

That is, partial optical scanning for each scanning range set in Step S105 is performed at narrower pitches than in Step S104 to detect the received light amount (Step S106). The scanning pitch at this time and the position resolution of the light receiving unit 7 are main factors for determining the accuracy of the alignment processing. In the case of using the GLV as the spatial light modulator 40, it is possible to realize a beam diameter of the spot light beam SB of 4 µm or less and the scanning pitch of about (1/3) of the beam diameter.

Then, for each peak in an obtained light amount profile, the peak position thereof, i.e. a position where the light amount is maximized, is specified (Step S107). The position specified in this way can be said to represent the incident position of the inspection light when the alignment is realized for each optical waveguide G.

From this result, an optimal reflection pattern of the spatial light modulator 40 for characteristic inspection performed later can be obtained. For each optical waveguide G, the reflection pattern in which the inspection light can be made incident at the position where the amount of the detected light is maximized corresponds to the "optimal" reflection pattern. The obtained reflection pattern can be stored in the storage 93 as a control amount for each movable ribbon 402 to realize this reflection pattern. The optimal reflection pattern is set by controlling each movable ribbon 402 of the spatial light modulator 40 based on the stored control amount (Step S108) and the characteristic inspection is performed in that state (Step S109), whereby the characteristic inspection can be performed in a state where the alignment of each optical waveguide G is realized.

The contents of the characteristic inspection are arbitrary and various physical property values necessary to evaluate the optical characteristics of the optical waveguide can be measured. An insertion loss, a near field pattern (NFP), a far field pattern (FFP), polarization properties and the like are generally used as the optical characteristics representing the quality of the optical waveguide, and these evaluation items can be measured also in the characteristic inspection of Step S109.

All the waveguides G in the work W may not be inspected by performing the above processing only once in some cases. These cases are, for example, a case where the size of the work W is larger than a width of the line beam LB, which can be generated by the light emitting unit 3, and a case where the input ends of the optical waveguides G are provided in a plurality of end surfaces of the work W. Accordingly, if the uninspected one is present, out of the optical waveguides G of the plurality of channels provided in the work W (NO in Step S110), the stage mover 53 is operated to change the position of the work W so that the uninspected optical waveguide G can be inspected (Step S111) and the processing after Step S103 is repeated. If the inspection of all the optical waveguides G is finished (YES in Step S110), it means that the inspection for the present work W has been completed.

As described above, in this embodiment, the alignment processing utilizing optical scanning by the spatial light modulator 40 is performed in inspecting the characteristics of the optical waveguides provided in the optical integrated circuit. Specifically, the line beam LB having the longitudinal direction made to coincide with the direction, in which the spatial light modulator 40 has a resolution, is made incident on the spatial light modulator 40, and the spatial light modulator 40 generates one or more spot light beams SB having a smaller spot size from the line beam LB.

The spot light beams SB generated in this way are respectively irradiated as inspection light beams to the optical waveguides G of the work W, and the optical waveguides G are optically scanned by changing the incident positions of the spot light beams with time, whereby conditions for maximizing a transmitted light amount are searched. By realizing the conditions for maximizing the light amount in this way, the purpose of the alignment processing is achieved.

Optical scanning using the spatial light modulator 40 is much faster than the conventional technique for mechanically changing an incident position of inspection light. Further, the plurality of optical waveguides can be processed in parallel and independently. Thus, in this embodiment, the alignment processing and the characteristic inspection of the optical waveguides based on the result of the alignment processing can be realized in a much shorter time than the conventional technique. According to the knowledge of the inventors, in the inspection apparatus 1 of this embodiment, a time required for the alignment processing per channel of the optical waveguide is less than 100 msec. Moreover, since the parallel processing is possible, a required time does not increase very much even if the number of the channels increases.

Further, the detected light emitted from the optical waveguide is received by the photosensor having a linear or two-dimensional position resolution and the received light amount is obtained for each position. Thus, strict position alignment is not necessary on the light receiving side. The processing time is shortened also by this.

As described above, in this embodiment, the inspection apparatus 1 corresponds to an "inspection apparatus" of the invention, and the light emitting unit 3 thereof corresponds to an "optical apparatus" and a "light emitting unit" of the invention. In the light emitting unit 3, the light source 31 and the illumination optical unit 33 (33b) respectively function as a "light source" and an "illumination optical unit" of the invention, whereas the projection optical unit 37 and the reflection mirror 39 integrally function as a "light guide" of the invention. Further, the modulator 35 functions as a "modulator" of the invention, and the spatial light modulator 40, 40b thereof functions as a "spatial light modulator" of the invention.

Further, the light receiving unit 7 and the controller 9 in the above embodiment respectively function as a "light receiving unit" and a "controller" of the invention. The holder 5 functions as a "holder" of the invention, and the stage mover 53 thereof functions as a "relative mover" of the invention.

Note that the invention is not limited to the above embodiment, and various changes other than the aforementioned ones can be made without departing from the gist of the invention. For example, although the light emitting unit 3 is incorporated into the inspection apparatus 1 in the above embodiment, the light emitting unit 3 can singly serve as the "optical apparatus" of the invention, assuming a combination with an external control apparatus.

Further, for example, in the light emitting unit 3 of the above embodiment, light emitted in the horizontal direction from the light source 31 is reflected downward by the spatial light modulator 40, further reflected in the horizontal direction by the reflection mirror 39 and made incident on the work W. These steps are a measure for avoiding the enlargement of the light emitting unit 3, and not necessarily essential requirements. Meanwhile, an optical element for further reflecting the optical path may be added as appropriate.

Further, in the above embodiment, the GLV element (one-dimensional) or the PLV element (two-dimensional) is used as the spatial light modulator 40. However, another device capable of realizing a similar spatial modulation at a high speed may be used as a light modulator.

Further, for example, the stage 51 for holding the work W is configured to be movable with respect to the light emitting unit 3 and the light receiving unit 7. However, instead of or in addition to this, at least one of the light emitting unit 3 and the light receiving unit 7 may be configured to move with respect to the stage 51. That is, the "relative mover" of the invention is not limited to the one for moving the "holder" as in the above embodiment, but may be the one for moving the "light emitting unit".

Further, although the optical characteristics of the optical waveguide are inspected based on the light reception result of the detected light emitted from the optical waveguide in the above embodiment, the optical apparatus of the invention can also be used to inspect an optical integrated circuit. That is, inspection light is made incident on an input end of an optical waveguide provided in the optical integrated circuit and detected light emitted through a circuit in the optical integrated circuit is received, whereby characteristics such as a delay and dispersion in the optical integrated circuit may be inspected.

As the specific embodiment has been illustrated and described above, a diffraction grating type light modulation element may be, for example, used as the spatial light modulator in the invention. Since such an element can realize various reflection patterns by programmably controlling light diffraction caused by a diffraction grating, this element is particularly suitable for the purpose of the invention.

Further, for example, the optical apparatus according to the invention may be further provided with the controller for changing the pattern shape of the emitted light with time by controlling the spatial light modulator. According to such a configuration, optical scanning for an object to be irradiated can be realized at a high speed by changing the position of the emitted light by an electrical control of the spatial light modulator. Utilizing this, the alignment processing for optimizing the light incident position on the optical waveguide can be performed in a short time.

In this case, the controller may set the pattern shape of the emitted light to emit a plurality of light beams from the spatial light modulator. By doing so, if the optical integrated circuit is provided with a plurality of optical waveguides, optical scanning for those can be performed in parallel. That is, the alignment processing for the plurality of optical waveguides can be temporally performed in parallel, and the processing time for the optical integrated circuit can be shortened.

Further, the light receiving unit may be further provided which receives light emitted from the output end of the optical waveguide as detected light. According to such a configuration, the operation of the spatial light modulator can be optimized by feeding the light reception result of the detected light by the light receiving unit back to the control of the spatial light modulator. For example, if the light receiving unit detects the incident position and the incident light amount of the received detected light, the incident position of the inspection light for realizing the alignment for the optical waveguide can be specified from that result.

Further, in the inspection apparatus of the invention, the controller can set the emission position of the emitted light to a position where the received light amount of the detected light is maximized when the inspection light is scanned, cause the light receiving unit to receive the detected light by making the inspection light incident on the input end, and inspect the characteristics of the optical waveguide based on the light reception result.

Further, the inspection apparatus of the invention may be further provided with the relative mover for adjusting the optical path of the incident light on the optical waveguide by changing the relative positions of the holder and the light emitting unit. According to such a configuration, a positional relationship of the holder and the light emitting unit can be roughly adjusted by the operation of the relative mover. Further, a wider part can be processed by changing a region subjected to the processing, out of the optical integrated circuit.

This invention is suitably applicable to inspect, for example, optical characteristics of an optical integrated circuit and particularly effective in inspecting an optical integrated circuit including a plurality of single-mode optical waveguides at a high speed.

## Claims

1. An optical apparatus for inspecting an optical integrated circuit, the optical apparatus comprising:
a light source which emits light;
an illumination optical unit which is configured to shape the light emitted from the light source into a predetermined shape;
a modulator which includes a spatial light modulator on which the light shaped by the illumination optical unit is incident, the modulator emitting modulated light having a predetermined pattern shape by modulating incident light by the spatial light modulator and; and
a light guide which guides the modulated light to an input end of an optical waveguide provided in the optical integrated circuit.

2. The optical apparatus according to claim 1, wherein
the illumination optical unit includes an optical system which is configured to shape the light emitted from the light source into a line beam, and
the modulator includes a diffraction grating type light modulation element as the spatial light modulator.

3. The optical apparatus according to claim 1, wherein
the illumination optical unit includes an optical system which is configured to shape the light emitted from the light source into a rectangular or elliptical cross-sectional shape, and
the modulator includes a liquid crystal optical element as the spatial light modulator.

4. The optical apparatus according to any one of claims 1 through 3, further comprising a controller which is configured to change the pattern shape of the modulated light with time by controlling the spatial light modulator.

5. The optical apparatus according to claim 4, wherein the controller set the pattern shape so as to emit a plurality of light beams from the spatial light modulator.

6. The optical apparatus according to claim 4, further comprising a light receiving unit which receives light emitted from an output end of the optical waveguide corresponding to the input end as detected light.

7. The optical apparatus according to claim 6, wherein the controller detects an incident position and an incident light amount of the detected light received by the light receiving unit.

8. An inspection apparatus for inspecting an optical integrated circuit, the inspection apparatus comprising:
a holder which holds the optical integrated circuit to be inspected;
a light emitting unit which includes the optical apparatus according to any one of claims 1 through 3 and emits the modulated light as inspection light to be incident on an input end of the optical waveguide via the light guide;
a light receiving unit which receives light emitted from an output end of the optical waveguide as detected light; and
a controller which is configured to adjust an incident position of the inspection light on the input end by controlling the spatial light modulator.

9. The inspection apparatus according to claim 8, wherein the controller changes an emission position of the light from the spatial light modulator with time so as to scan an incident position of the inspection light to the input end.

10. The inspection apparatus according to claim 9, wherein the controller inspects a plurality of the optical waveguides provided on the optical integrated circuit in parallel in time.

11. The inspection apparatus according to claim 9, wherein
the controller setts an emission position of the light from the spatial light modulator at a position where the received light amount of the detected light is maximized when the inspection light is scanned, causes the light receiving unit to receive the detected light by making the inspection light incident on the input end, and inspects characteristics of the optical waveguide based on a light reception result.

12. The inspection apparatus according to claim 9, further comprising
a relative mover which changes a relative position of the holder and the light emitting unit and adjusts an optical path of incident light on the optical waveguide.

13. An alignment method for inspecting characteristics of an optical waveguide provided in an optical integrated circuit, the alignment method comprising:
making light emitted from a light source and shaped into a predetermined shape incident on a spatial light modulator arranged on an optical path of the light;
modulating the light by the spatial light modulator, emitting modulated light having a predetermined pattern shape and changing the pattern shape of the modulated light by the spatial light modulator with time;
making the modulated light from the spatial light modulator as inspection light incident on an input end of the optical waveguide and scanning an incident position of the inspection light on the input end;
receiving light emitted from an output end of the optical waveguide as detected light while the incident position of the inspection light is scanned; and
setting an emission position of the modulated light to the incident position where a received light amount of the detected light is maximized.

14. The inspection method according to claim 13, wherein controller inspects a plurality of the optical waveguides provided on the optical integrated circuit in parallel in time.
